Europäisches Patentamt

European Patent Office

Office européen des brevets

(11) Publication number: **0 451 713 A1**

## EUROPEAN PATENT APPLICATION

(21) Application number: 91105380.9

(22) Date of filing: 05.04.91

(51) Int. Cl.5: **G06K 13/08, G11B 25/04, E05B 49/00**

(30) Priority: **11.04.90 IT 478590 U**

(43) Date of publication of application:
**16.10.91 Bulletin 91/42**

(84) Designated Contracting States:
**AT BE CH DE DK ES FR GB GR LI NL SE**

(71) Applicant: **Costruzioni Italiane Serrature Affini C.I.S.A. S.p.A.**
**Via Oberdan 42**
**I-48018 Faenza (Province of Ravenna)(IT)**

(72) Inventor: **Errani, Deo**
**Via Cavour, 46**
**I-48018 Faenza, (Ravenna)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) Reading head protection device in locks operated by magnetic cards.

(57) The reading head protection device in locks operated by magnetic cards includes a spring loaded pivoting lever (19) arranged to intersect, in its protecting position, the guide channel (7) for the magnetic card (16) and thereby accommodate in its cavity (25) the reading head device (15). The lever (19) is provided with opposite portions (23,24) which permit card entry only from one direction in the channel (7).

Fig. 4

EP 0 451 713 A1

The present invention relates to a reading head protection device in locks operated by magnetic cards.

As known, locks operated by magnetic cards already exist. Said locks are constituted by a metallic container which can be fixed to a respective door.

The casing contains mechanical elements for actuating the closure lever of the door and a support for a reading head which is provided with a channel which also acts as guide for the respective magnetic card.

The container has, at said support, a front longitudinal slot for the insertion of the card on the part of the user; in a known manner, said card has an encoded magnetized region which is intended to make contact with the reading head which protrudes inside the guide.

One of the disadvantages of said locks operated by magnetic cards is constituted by the fact that the insertion of the card in the slot is often performed incorrectly by the user. In particular, instead of inserting the card longitudinally with respect to the slot, the user tends to insert it perpendicular thereto. In this manner, since the reading head protrudes into the guiding channel, it is struck by the card and is subjected to damaging stress, i.e. a stress which is orthogonal to the direction of the elastic thrust by means of which it is kept in contact with the magnetic band tor reading.

The information encoded in the magnetic band can furthermore often be read only in one sliding direction of the magnetic card in front of the reading head. Said sliding direction cannot be unequivocally identified by less attentive users.

The technical aim of the present invention is therefore to provide a device which allows to protect the reading head against improper insertions of the magnetic card, preventing said head from being subjected to any mechanical damage which compromises its position and reading capability.

Within the scope of this aim, an object of the present invention is to provide a device which allows to read the magnetic card only in the intended direction and therefore in a more reliable manner.

A further object of the invention is to provide a device which has actuation means for a pushbutton of a switch which can activate the electric circuit of the lock.

A further object of the invention is to provide a device which is simple in concept and safely reliable in operation.

This aim and these objects are achieved by a device as defined in the appended claims.

The details of the invention will become apparent from the detailed description of a preferred embodiment of the reading head protection device in locks operated by magnetic cards, illustrated only by way of non-limitative example in the accompanying drawings, wherein:

figure 1 is a side view of a lock wherein the covering container is shown raised with respect to the plate on which the device is mounted;

figure 2 is a plan view of the plate on which the device is mounted;

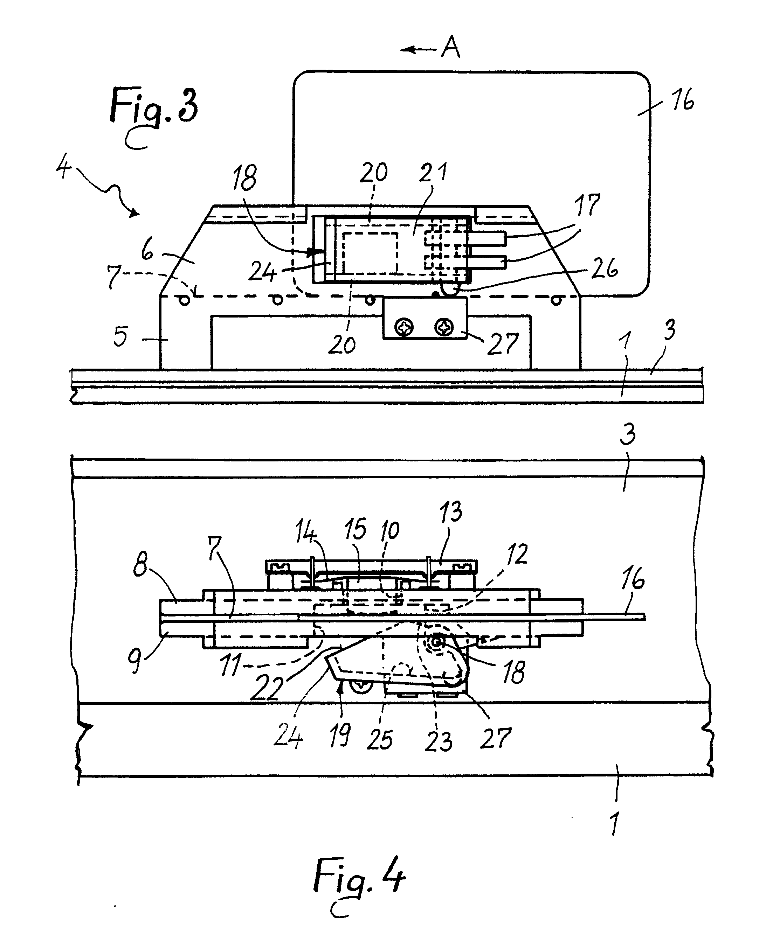

figures 3 and 4 are enlarged-scale views of the left part of figures 1 and 2 respectively.

With reference to the above figures, the lock has a container which is formed by a rectangular base plate 1 to which a cambered cover 2 is frontally associated by means of screws so as to define an enclosed space between said plate and said cover.

A base 3 is fixed to the inner face of the plate 1, and the electric circuit, not illustrated in the drawings, is defined thereon.

A substantially U-shaped supporting body 4 is mounted on the base 3 with its tines 5 perpendicular to said base.

A bridge 6 extends between said tines, and a channel 7 is defined therein; said channel is open at its opposite ends and upwardly, and defines two parallel walls 8 and 9.

Respective openings 10 and 11 are defined in the walls 8 and 9, intersect the channel 7 and face one another. More precisely, the opening 11 is larger than the opening 10, and its depth extends into the wall 8, where it defines an internal shoulder 12 which surrounds the opening 10.

A plate 13 is fixed by means of screws to the sides of the opening 10 on the outer face of the wall 8 and elastically supports, by means of a spring 14, a reading head 15 which is accommodated in the opening 10 and protrudes into the channel 7. The reading head, which is not described in detail since it is entirely known, has a face which protrudes into the channel 7; said face is convex to facilitate the passage of a magnetic card 16, as will become apparent hereinafter.

A pair of superimposed lobes 17 protrudes laterally with respect to the opening 11 on the outer face of the wall 9, and an articulation pivot 18 for a substantially box-like lever 19 is driven through said lobes.

Said lever 19, which oscillates in a plane which is perpendicular to the channel 7, comprises two planar and parallel wings 20 which are superimposed and are mutually connected by an outer wall 21.

Said wings 20 have a straight front edge 22 which continues with an oblique or rounded portion 23 proximate to the articulation pivot, whereas it defines a step 24 on the side which corresponds to the free end of the lever 19.

The wings 20 define, above and below, a cavity 25 which is open toward the channel 7 and is closed toward the outside by the wall 21.

By virtue of the action of a spiral spring (which is not illustrated but is fully conventional) inserted on the articulation pivot 18, the lever 19 is rotated so as to cause the penetration of the front edges 22 through the opening 11 and their abutment against the shoulder 12 of the wall 8.

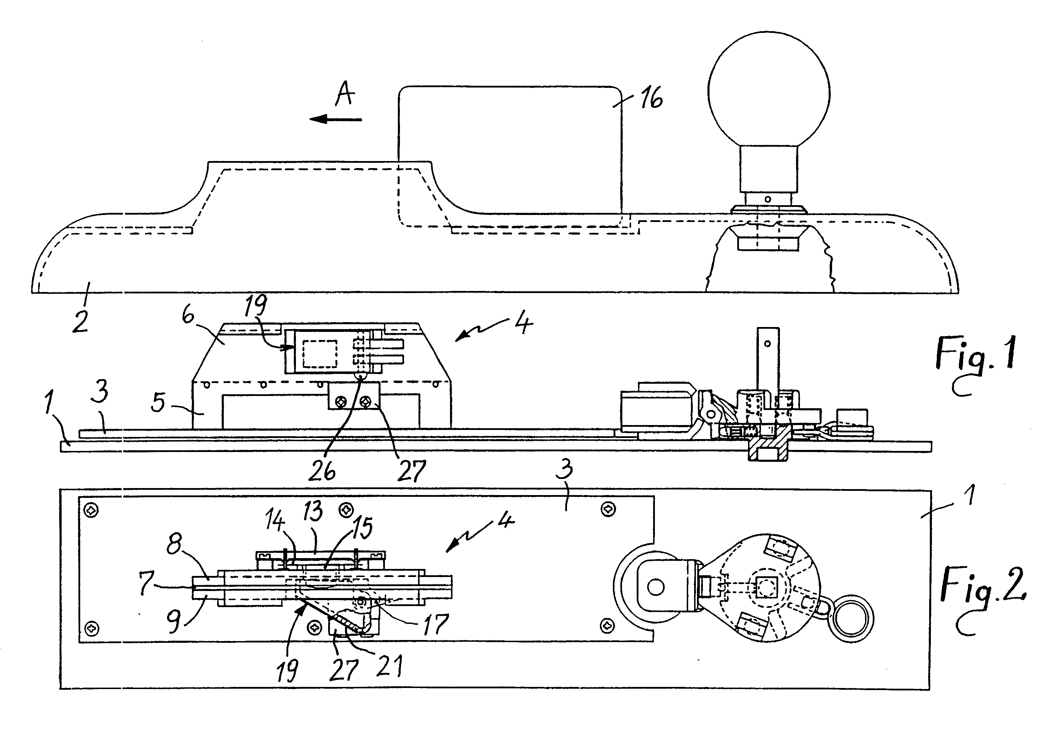

In this situation, illustrated in figure 2, the rounded portion 23 and the step 24 intersect the channel 7, whereas the reading head 15 extends partially into the cavity 25 between the wings 20.

The lever 19 is completed by a rounded tooth 26 which protrudes from the lower wing 20 and is operatively associated with a switch 27 which is mounted on the support 4. Said switch 27 controls the circuit which controls the opening of the lock.

The operation of the described device is as follows.

When the lock is not activated, the lever 19 is retained by the spiral spring in abutment position on the shoulder 12.

In this position, the lever covers the reading head 15, whereas the wings 20 intersect the channel 7.

If the lock is to be opened, the magnetic card 16 is inserted in the channel 7 along the direction A until its front edge makes contact with the rounded portion 23. The further sliding of the card in the channel 7 then causes the outward rotation of the lever 19 in contrast with the return action of the spiral spring. Due to this return action, the lever 19 continues to act laterally on the card, keeping it in contact with the head 15 and thus ensuring reliable reading.

When the card has passed through the channel 7 and has passed beyond the step 24 with its rear edge, the lever 19 returns to the position in which it covers the reading head.

It should be noted that by means of the outward rotation of the lever 19 the pushbutton of the switch 27 is actuated by the tooth 26 and the electric circuit of the lock is activated before the card passes in front of the head 15 for the reading of the encoded command.

The essential prerogative of the present invention is constituted by the fact that when the lever 19 is in the position in which it covers the reading head 15 it is not possible to insert the card improperly. Insertion of the card in a direction opposite to A is in fact prevented by the step 24, against which the card would collide. A useless reading of the code stored in the card is thus avoided.

The insertion of the card in the channel 7 along a direction orthogonal to A is furthermore prevented by the wing 20. Damage of the head 15, which by protruding into the channel 7 due to the thrust of the spring 14 would be unduly forced by being struck transversely by the card, is thus prevented. Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Reading head protection device in a lock operated by magnetic cards (16), the lock being of the type which comprises a body (4) which has a channel (7) for the insertion of the card (16), said body supporting, on one side, a magnetic card reading head (15) which protrudes into said channel (7), said reading head device being characterized in that an element (19) is pivoted to said body (4) laterally to said channel (7), said element (19) being suitable for oscillating in contrast with elastic return means between a position in which it intersects the channel (7), at which said element (19) covers the head (15) when the card (16) is not inserted in the channel, and a position in which said element (19) allows the passage of the card (16) along the channel (7), said element (19) being shaped so as to allow the passage of the card (16) in front of the reading head (15) only in one direction.

2. Device according to claim 1, characterized in that said channel (7) is defined by two parallel walls (8,9) in which two opposite openings (10, 11) are defined, a reading head (15) and said oscillating element (19) protruding into said channel (7) through said openings (10, 11).

3. Device according to claim 2, characterized in that said oscillating element is constituted by a box-like lever (19) which is pivoted on the wall (9) which is opposite to the wall (8) which supports the head (15) and comprises at least one wing (20) which has a front edge (22) and, at the opposite ends of said front edge, a step (24) and respectively a rounded portion (23), said front edge (22) being suitable for assuming a position in which the reading head (15) is covered by the lever and wherein said front edge abuts on the supporting wall (8) of the reading head (15), whereas said step (24) and said rounded portion (23) intersect said channel (7).

4. Device according to claim 3, characterized in that said oscillating lever (19) comprises two planar and parallel wings (20) which are mutually connected by an outer wall (21) so as to define a cavity (25) which is open toward the channel (7) for the arrangement of said reading head (15) in said cavity.

5. Device according to claims 1-4, characterized in that said oscillating lever (19) comprises a tooth (26) for the actuation of the switch (27) which activates the electric circuit of the lock.

6. Device according to claims 1-5, characterized in that said elastic return means comprise a spiral spring which is inserted on the articulation pivot (18) of said lever (19) and acts between said lever (19) and said body (4).

Fig.1

Fig.2

Fig.3

Fig.4

6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 515 390   (FUNDACAO BRADESCO)<br>* page 3, line 8 - page 4, line 16; figures 2, 3 *<br>- - - | 1,2 | G 06 K 13/08<br>G 11 B 25/04<br>E 05 B 49/00 |
| A | IBM TECHNICAL DISCLOSURE BULLETIN. vol. 14, no. 8, 01 January 72, NEW YORK US page 2520 lewis,reitfort: "unidirectional gate for card readers"<br>- - - | 1,3 | |
| A | US-A-3 712 973   (KRAL)<br>* column 2, line 47 - column 3, line 25; figures 1, 2 *<br>- - - | 1,5 | |
| A | US-A-3 866 827   (ATSUSHI OBATA,MAMORU NAMIKAWA)<br>- - - - - | 1 | |

| | TECHNICAL FIELDS SEARCHED (Int. Cl.5) |
|---|---|
| | G 06 K<br>G 11 B<br>E 05 B |

The present search report has been drawn up for all claims

| Place of search | Date of completion of search | Examiner |
|---|---|---|
| The Hague | 26 June 91 | HERBELET J.C. |